# DEMANDE DE BREVET EUROPEEN

(11) **EP 1 780 457 A1**
(43) Date de publication de la demande: **02.05.2007**
(21) Numéro de dépôt: 06291615.0
(22) Date de dépôt: 17.10.2006
(51) Int. Cl.: F16L 11/08

(54) **Tuyau souple en matière plastique multicouche**

(30) Priorité: 25.10.2005 FR 0510855
(71) Demandeur: Hozelock Tricoflex, 92500 Rueil Malmaison (FR)
(72) Inventeur: Pinoit, Dominique, 51300 Pringy (FR)
(74) Mandataire: Robert, Jean-Pierre

(57) **Abrégé**

Tuyau souple en matière plastique multicouche qui comporte, de l'intérieur vers l'extérieur : une couche interne (1) comportant un polyéthylène inerte par rapport à l'eau, une couche de liaison (2) ayant des propriétés d'adhésion envers le polyéthylène et le polychlorure de vinyle souple, une couche de polychlorure de vinyle (3) souple, une armature tubulaire (4) au contact d'un polychlorure de vinyle, ces matériaux étant de qualité alimentaire,dans lequel l'armature tubulaire est formée à partir de fibres de verre longues, tressées, guipées ou enroulées.

## Description

La présente invention concerne un tuyau souple en matière plastique multicouche pour le transport de fluides destiné par exemple à être implanté dans des installations fixes ou mobiles de distribution d'eau potable.

### ARRIERE PLAN DE L'INVENTION

Actuellement, les éléments destinés à être implantés dans les circuits de distribution d'eau potable, comme par exemple les canalisations, les robinets, les raccords, doivent recevoir une attestation de conformité à des normes sanitaires de deux niveaux. Dans le premier niveau, l'élément ne peut être utilisé que pour des applications dans lesquelles il n'est en contact avec l'eau potable transportée que pendant de courtes durées, éventuellement de façon répétée. Dans le deuxième niveau, l'élément peut être utilisé pour toute application de transport d'eau potable et en particulier pour celles où l'eau est en contact continûment avec l'élément.

Parmi les éléments conformes au second niveau, les canalisations ont pour la plupart une structure rigide. On connaît ainsi de telles canalisations qui sont réalisées en polyéthylène, en polypropylène ou en polychlorure de vinyle rigides spéciaux pour être inertes tant chimiquement que physiquement à l'égard de l'eau potable transportée. Ces canalisations sont de fabrication aisée et peu coûteuse de sorte que leur emploi est largement répandu dans les installations de distribution. Toutefois, la rigidité de ces canalisations en matière plastique introduit des limites quant à leur installation et leur entretien.

Il est par ailleurs connu du document FR-A-2794 212 un tuyau souple en matière plastique multicouche comportant, de l'intérieur vers l'extérieur une couche interne d'une polyoléfine inerte par rapport à l'eau, une couche de liaison ayant des propriétés d'adhésion envers la polyoléfine et un polychlorure de vinyle souple, une couche externe en polychlorure de vinyle souple, et une armature tubulaire au contact du polychlorure de vinyle. Ce tuyau ne satisfait pas aux normes (notamment relatives au transport de l'eau potable) qui exigent de contrôler en plus du tuyau chacun des composants qui le constitue.

On a également décrit dans le document FR-A-2 865 521 un tuyau souple en matière plastique multicouche, comportant, de l'intérieur vers l'extérieur: - une couche interne comportant un plastomère inerte par rapport à l'eau,
- une couche de liaison ayant des propriétés d'adhésion envers le mélange et le polychlorure de vinyle souple,
- une couche de polychlorure de vinyle souple,
- une armature tubulaire au contact du polychlorure de vinyle, ces matériaux étant de qualité alimentaire. L'armature tubulaire est de préférence réalisée ici à base de polyester et plus précisément de fibres de polyéthylène téréphtalate (PET). Des fibres de polyamide ou de polypropylène pourraient également être utilisés.

On s'est rendu compte que ce genre de structure présentait le risque d'une migration de certains composants du tuyau composite vers la surface du tube en contact avec l'eau, qui ne permet pas d'obtenir la certification requise pour le transport de l'eau potable.

### OBJET DE L'INVENTION

L'invention entend d'une part satisfaire aux exigences des normes rappelées ci-dessus et d'autre part remédier aux risques de migration en proposant une armature tubulaire d'une autre nature.

### RESUME DE L'INVENTION

A cet effet, l'invention a pour objet un tuyau souple en matière plastique multicouche qui comporte, de l'intérieur vers l'extérieur:
- une couche interne comportant un polyéthylène inerte par rapport à l'eau,
- une couche de liaison ayant des propriétés d'adhésion envers le polyéthylène et le polychlorure de vinyle souple,
- une couche de polychlorure de vinyle souple,
- une armature tubulaire au contact d'un polychlorure de vinyle, ces matériaux étant de qualité alimentaire,
dans lequel l'armature tubulaire est formée à partir de fibres de verre longues, tressées, guipées ou enroulées.

Le tuyau ainsi constitué est parfaitement apte au transport de l'eau potable et présente contre toute attente une souplesse suffisante à l'implantation aisée du tuyau, tout en conservant de relativement bonnes qualités mécaniques notamment en ce qui concerne la résistance à l'éclatement à l'égard de la pression régnant généralement dans les circuits auquel ce tuyau est destiné et la résistance aux sollicitations extérieures.

Ce tuyau présente par ailleurs une bonne résistance aux solvants, ainsi qu'aux acides et bases forts, en particulier à des températures inférieures à 40 C environ.

Selon un mode de réalisation particulier, les couches ont des épaisseurs comprises entre: - 0,1 mm à 4 mm environ pour la couche interne, - 0,1 mm à 2 mm environ pour la couche de liaison, - 0,5 mm à 4 mm environ pour la couche de polychlorure de vinyle. Cette structure représente un compromis satisfaisant entre souplesse et résistance mécanique.

D'autres caractéristiques et avantages de l'invention ressortiront à la lecture de la description qui suit d'un mode de réalisation particulier non limitatif de l'invention.

### BREVE DESCRIPTION DES DESSINS

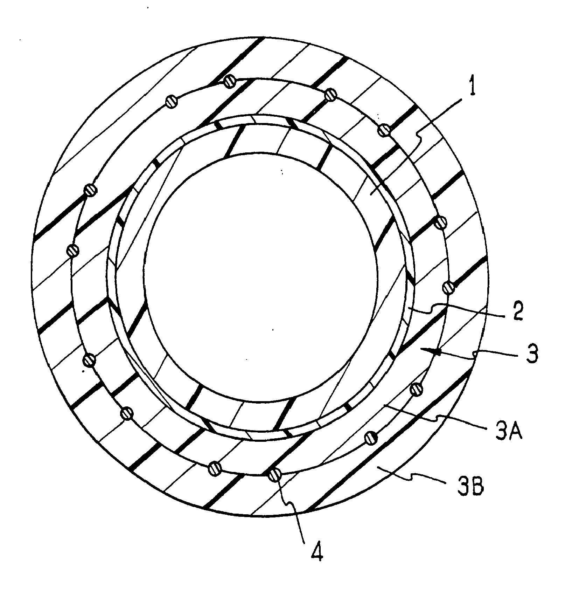

Il sera fait référence à la figure unique annexée représentant une vue en coupe transversale d'un tuyau conforme à l'invention.

### DESCRIPTION DETAILLEE DE L'INVENTION

En référence à la figure, le tuyau conforme à l'invention comprend une couche interne 1 réalisée en polyéthylène, dont les caractéristiques sont compatibles avec le transport de l'eau et sont conformes aux normes sanitaires prévoyant que cette couche puisse être en contact de façon continue avec de l'eau stagnante. Le matériau employé est notamment inerte physiquement et chimiquement à l'égard de l'eau transportée pour ne pas entraîner une modification inacceptable de la composition des denrées ou une altération des propriétés organoleptiques de celle-ci.

La couche interne 1 a une épaisseur comprise entre 0,1 mm et 4 mm. La faible épaisseur de la couche interne rend celle-ci déformable et contribue à conférer de la souplesse au tuyau. A titre d'exemple, pour un diamètre interne du tuyau de 13 mm, la couche interne a une épaisseur d'environ 0,5 mm.

La couche interne 1 est recouverte d'une couche intermédiaire 2 assurant la liaison de la couche interne 1 avec une couche externe 3 réalisée en polychlorure de vinyle recouvrant la couche intermédiaire 2.

La couche intermédiaire 2 est réalisée dans un matériau ayant des propriétés d'adhésion envers le polyéthylène et le polychlorure de vinyle. En l'espèce, la couche intermédiaire 2 est réalisée à partir d'un copolymère éthylène - acétate de vinyle (EVA) qui permet d'obtenir une cohésion des couches 1 et 3. De préférence, la proportion d'acétate est relativement élevée pour favoriser l'adhérence des couches. Le copolymère utilisé est apte à un contact alimentaire. On utilisera par exemple le matériau référencé ELVAX 170 de la société DUPONT DE NEMOURS. La couche intermédiaire 2 a une épaisseur comprise entre 0,1 mm et 2 mm, ici de l'ordre de 0,7 mm (pour un diamètre extérieur de 13 mm).

La couche externe 3 est ici formée d'une première couche 3A de polychlorure de vinyle souple ayant une épaisseur comprise entre 0,5 mm et 2 mm et une deuxième couche 3B de polychlorure de vinyle souple ayant également une épaisseur comprise entre 0,5 mm et 2 mm. Le polychlorure de vinyle utilisé est apte à un contact alimentaire. La couche externe 3 pourrait, dans un autre mode de réalisation, être réalisée en une seule pièce.

Une armature tubulaire 4 est disposée au contact du polychlorure de vinyle entre par exemple, dans le cas préféré, les deux couches 3A et 3B de la couche externe 3. Bien entendu, l'armature tubulaire 4 pourrait également être disposée entre la couche intermédiaire 2 et la couche externe 3. L'armature tubulaire 4 est réalisée ici à base de fibres de verre longues qui sont disposées autour de la première couche 3A de polychlorure de vinyle. Ces fibres sont disposées selon des techniques connues de guipage d'enroulage par nappe de fibres ou de tresses de fibres autour du noyau de tube déjà extrudé.

Les matériaux utilisés sont de qualité alimentaire.

Le tuyau ainsi réalisé est conforme à l'Arrêté du 29 mai 1997 relatif aux objets utilisés dans la distribution d'eau potable destinée à la consommation humaine.

Par ailleurs, on notera que ce tuyau possède des propriétés physicochimiques le rendant résistant aux solvants et aux acides et bases forts à des températures inférieures à une quarantaine de degrés centigrades.

Le tuyau conforme à l'invention est réalisé selon la technique bien connue de coextrusion.

D'une manière générale, les épaisseurs des différentes couches sont déterminées de manière que le tuyau soit suffisamment souple et résistant et sont adaptées au diamètre interne du tuyau.

Bien entendu, l'invention n'est pas limitée au mode de réalisation décrit et on peut y apporter des variantes de réalisation sans sortir du cadre de l'invention tel que défini par les revendications.

## Revendications

1. Tuyau souple en matière plastique multicouche qui comporte, de l'intérieur vers l'extérieur:
- une couche interne (1) comportant un polyéthylène inerte par rapport à l'eau,
- une couche de liaison (2) ayant des propriétés d'adhésion envers le polyéthylène et le polychlorure de vinyle souple,
- une couche de polychlorure de vinyle (3) souple,
- une armature tubulaire (4) au contact d'un polychlorure de vinyle, ces matériaux étant de qualité alimentaire,
**caractérisé en ce que** l'armature tubulaire est formée à partir de fibres de verre longues, tressées, guipées ou enroulées.

2. Tuyau selon la revendication 1, **caractérisé en ce que** l'armature (4) est située entre une première couche (3A) de polychlorure de vinyle et une seconde couche (3B) de polychlorure de vinyle formant ladite couche de polychlorure de vinyle (3).

3. Tuyau selon l'une des revendications précédentes, **caractérisé en ce que** les couches ont des épaisseurs comprises entre: - 0,1 mm à 4 mm environ pour la couche interne (1), - 0,1 mm à 2 mm environ pour la couche de liaison (2), - 0,5 mm à 4 mm environ pour la ou les couches de polychlorure de vinyle (3).
